# EUROPEAN PATENT APPLICATION

(11) **EP 3 222 147 A1**
(43) Date of publication of application: **27.09.2017**
(21) Application number: 15862031.0
(22) Date of filing: 21.07.2015
(51) Int. Cl.: A21B 3/13

(54) **BREADMAKING TRAY AND MANUFACTURING METHOD THEREFOR**

(30) Priority: 19.11.2014 KR 20140161441
(71) Applicant: Korea Taconic Co., Ltd, Seongnam-si, Gyeonggi-do 463-828 (KR)
(72) Inventor: LIM, Yong Muk, Seongnam-si, Gyeonggi-do 463-827 (KR); KIM, Jin Woo, Seoul 130-843 (KR); KIM, Young Sam, Anyang-si, Gyeonggi-do 430-705 (KR); HAN, Seung Hwan, Jeonju-si, Jeollabuk-do 561-764 (KR); PARK, Sang Min, Seoul 135-837 (KR)
(74) Representative: Ter Meer Steinmeister & Partner
(86) International application number: PCT/KR2015/007549
(87) International publication number: WO 2016/080628

(57) **Abstract**

A breadmaking tray according to the present invention includes a breadmaking tray body B in which: (i) a fluorine resin film 2 having a thickness of 75 to 500 µm is laminated on a metal substrate 1 through heat bonding; (ii) a plurality of holes h are punched; and (iii) an appearance thereof has a plate shape bent in a corrugated form, and the breadmaking tray can further include a frame A for supporting the body B. A method for manufacturing a breadmaking tray according to the present invention includes the steps of: (i) laminating a fluorine resin film 2 having a thickness of 75 to 500 µm on a metal substrate 1 by a thermal fusion bonding method under high temperature and high pressure conditions to prepare a base plate D; (ii) punching holes h in the base plate D prepared in the above step; and (iii) molding the base plate D having the holes h punched therein in the above step into a shape of a breadmaking tray body B bent in a corrugated form. The breadmaking tray of the present invention has excellent release properties since flour dough comes into contact with only the inner walls of holes h punched in the fluorine resin film 2 having excellent release properties during a breadmaking process, without coming into contact with the inner walls of holes h punched in the metal substrate 1. The method for manufacturing a breadmaking tray according to the present invention has effects of improving workability in a manufacturing process, improving release properties by preventing an occurrence of pin-holes, etc. during coating the fluorine resin, extending a service life, and preventing environmental contamination at a workplace.

## Description

### [Technical Field]

The present invention relates to a breadmaking tray and a manufacturing method therefor, and more particularly, to a breadmaking tray that can improve release properties by preventing a phenomenon in which flour dough is adhered to inner walls of holes punched in a breadmaking tray body to be remained during a breadmaking process due to excellent release properties, and simplify a manufacturing process of the breadmaking tray, as well as improve a breadmaking work environment, and a method for manufacturing the same.

### [Background Art]

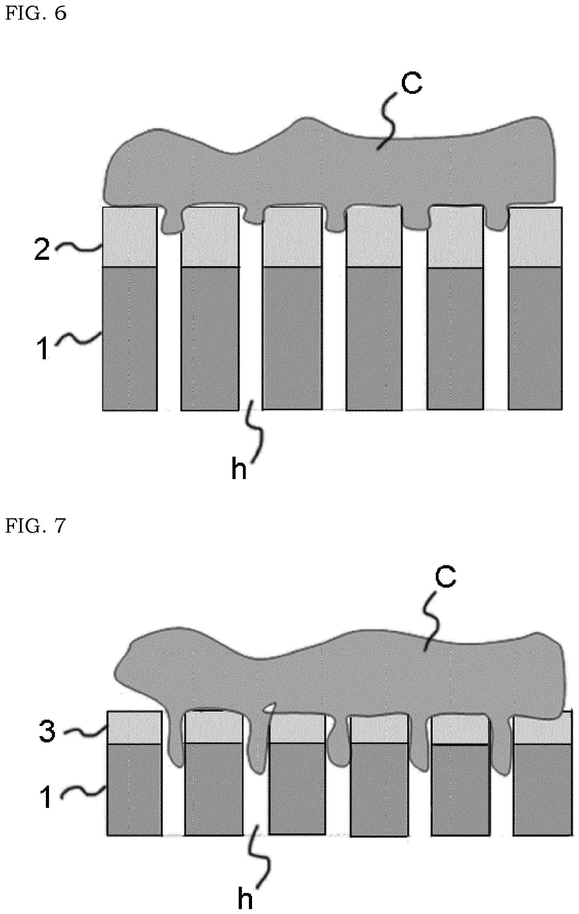

Hereinafter, the term of a "breadmaking tray" used in the present invention is defined as a meaning to include all trays used for making bread with flour dough, and other trays for making foods such as dumplings with flour dough. A conventional breadmaking tray includes, as illustrated in FIG. 7, a plate-shaped breadmaking tray body B in which a fluorine resin coating layer 3 having a thickness of 10 to 25 µm is formed on a metal substrate 1, and a plurality of holes h are punched therein, and if necessary further includes a frame A disposed under the breadmaking tray body B to support the same.

FIG. 7 is a schematic view illustrating a state in which flour dough is placed on the conventional breadmaking tray during a breadmaking process.

The conventional breadmaking tray is manufactured by sequentially performing the steps of: (i) punching holes h in a metal substrate 1, (ii) molding the metal substrate 1 having holes h punched therein into a shape of a breadmaking tray body B, and (iii) powder coating or liquid spray coating a fluorine resin coating solution on a surface of the breadmaking tray body B to form a fluorine resin coating layer 3. In this case, if necessary, a step of disposing a frame A under the breadmaking tray body B having the fluorine resin coating layer 3 formed thereon to fix and support the same is additionally performed.

As the fluorine resin coating solution, a polytetrafluoroethylene (PTFE) coating liquid or a tetrafluoroethylene-perfluoroalkyl vinyl ether (PFA) coating liquid has been used.

In the conventional method for manufacturing the breadmaking tray, since the metal substrate 1 is molded into a shape of the breadmaking tray body B, and then the fluorine resin coating solution is coated on the surface of the metal substrate 1 having a bent portion bent portion by the molding, there are problems of causing a difficulty in uniform coating, and significantly reducing coating workability.

Further, when powder coating the fluorine resin coating solution on the surface of the metal substrate 1 molded as described above, release properties are deteriorated due to coating defects such as pin-holes, thereby a problem of shortening a service life of the breadmaking tray occurs.

Further, when liquid spray coating the fluorine resin coating solution on the surface of the metal substrate 1 molded as described above, a phenomenon, in which a part of the fluorine resin coating layer is peeled off due to voids and volatile components present in a coating film, occurs, thereby causing problems that the release properties are significantly reduced and a metal component forming the metal substrate 1 is detected in the manufactured bread.

Furthermore, when powder coating or liquid spray coating the fluorine resin coating solution on the surface of the metal substrate 1 molded as described above to form the fluorine resin coating layer 3, due to a phenomenon in which pin-holes or coating film cracks are largely generated to reduce the release properties, there is a problem of causing a difficulty in forming the fluorine resin coating layer 3 so as to have a thickness of 25 µm or more.

Therefore, the conventional breadmaking tray has problems that, since the thickness of the fluorine resin coating layer 3 included in the conventional breadmaking tray is as thin as 20 to 25 µm, as illustrated in FIG. 7, flour dough C flows down to the inner walls of the holes h punched in the fluorine resin coating layer 3 having excellent release properties, as well as the inner wall of the holes h punched in the metal substrate 1 having poor release properties during the breadmaking process, thereby resulting in a significant reduction in the release properties.

As another conventional method for manufacturing the conventional breadmaking tray in which the fluorine resin coating layer 3 is formed on the metal substrate 1 and a plurality of holes h are formed therein, a method of previously forming the fluorine resin coating layer 3 on the metal substrate 1 prior to molding the metal substrate 1 in the shape of the breadmaking tray after punching the metal substrate 1 has been known in the art. The above-described conventional method has an effect of improving the coating workability in forming the fluorine resin coating layer 3, but there is a difficulty in increasing the thickness of the fluorine resin coating layer 3 to 25 µm or more due to the pin-holes or film cracks. Accordingly, as illustrated in FIG. 7, the flour dough C flows down to the inner walls of the holes h punched in the metal substrate 1 during the breadmaking process, and thereby the problem of reducing the release properties could not be solved.

Meanwhile, a breadmaking tray including a plate-shaped breadmaking tray body, in which soybean oil is applied to the metal substrate 1 instead of the fluorine resin coating solution and a plurality of holes are punched therein, has been used. However, the conventional breadmaking tray has problems that, since the soybean oil is oxidized to generate a gas, a breadmaking work environment becomes poor, and the soybean oil should be applied to the metal substrate every time of using the same, thereby causing a reduction in workability. Further, the oxidized soybean oil is soaked into the manufactured bread, thereby causing harmful results to consumers.

### [Disclosure]

### [Technical Problem]

Accordingly, it is an object of the present invention to provide a breadmaking tray capable of improving release properties, simplifying a manufacturing process, extending a service life, and improving a breadmaking work environment, and a method for manufacturing the same.

### [Technical Solution]

In order to accomplish the above object, there is provided a breadmaking tray including a breadmaking tray body B, which is manufactured by sequentially performing the steps of: (i) laminating a fluorine resin film 2 having a thickness of 75 to 500 µm on a metal substrate 1 by a thermal fusion bonding method under high temperature and high pressure conditions to prepare a base plate D; (ii) punching holes h in the base plate D prepared in the above step; and (iii) molding the base plate D having the holes h punched therein in the above step into a shape of the breadmaking tray body B bent in a corrugated form, thereby characterized in that (i) a fluorine resin film 2 having a thickness of 75 to 500 µm is laminated on a metal substrate 1 by the thermal fusion bonding method, ii) a plurality of holes h are punched therein, and (iii) an appearance thereof has a plate shape bent in the corrugated form.

### [Advantageous Effects]

According to the breadmaking tray body B of the present invention, since the fluorine resin film 2 having a relatively thicker thickness than that of the fluorine resin coating layer formed by the conventional coating method is laminated on the metal substrate 1 by the thermal fusion coating method, flour dough C comes in contact with only the inner walls of the holes h punched in the fluorine resin film 2 having excellent release properties, while not contacting with the inner walls of the holes h punched in the metal substrate 1 during the breadmaking process. Thereby, after the breadmaking process, a phenomenon, in which the breadmaking flour dough C is adhered to the inner walls of the holes h punched in the breadmaking tray body B to be remained, may be substantially prevented.

In the method of manufacturing a breadmaking tray according to the present invention, the fluorine resin film 2 is laminated on the plate-shaped metal substrate 1 by the thermal fusion bonding method, and then punching and molding are performed thereon. Therefore, when comparing with the conventional method of coating a fluorine resin on each breadmaking tray having the bent portion, there are effects of improving workability in a manufacturing process, improving release properties by preventing an occurrence of pin-holes, etc. during coating the fluorine resin, extending a service life, and preventing environmental contamination at a workplace. In addition, as compared with the conventional method of applying soybean oil, there is an effect of preventing contamination of the workplace environment due to oxidation of soybean oil.

### [Description of Drawings]

FIG. 1 is a photograph illustrating an upper surface of a breadmaking tray.
FIG. 2 is a photograph illustrating a lower surface of the breadmaking tray.
FIG. 3 is a photograph illustrating a side surface of the breadmaking tray.
FIG. 4 is a schematic cross-sectional view illustrating a breadmaking tray body B according to the present invention.
FIG. 5 is a schematic cross-sectional view illustrating a base plate D used in the present invention.
FIG. 6 is a schematic view illustrating a state in which flour dough is placed on a breadmaking tray body B according to the present invention during a breadmaking process.
FIG. 7 is a schematic view illustrating a state in which the flour dough is placed on a conventional breadmaking tray body B during the breadmaking process.

### [Best Mode]

Hereinafter, the present invention will be described in detail with reference to the accompanying drawings.

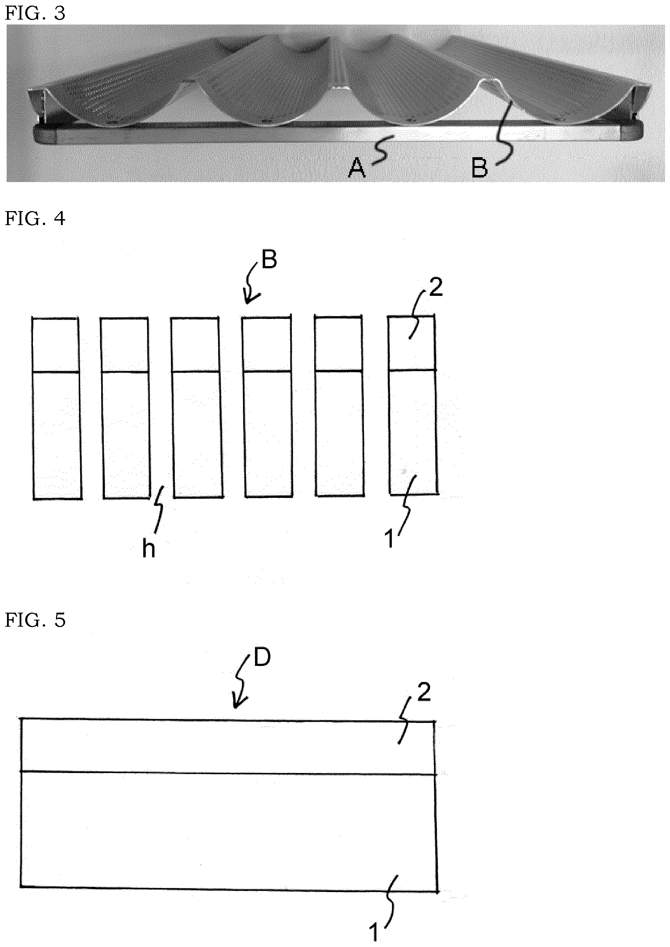

The breadmaking tray according to the present invention includes, as illustrated in FIG. 4, a breadmaking tray body B in which (i) a fluorine resin film 2 having a thickness of 75 to 500 µm is laminated on a metal substrate 1 by a thermal fusion bonding method, ii) a plurality of holes h are punched therein, and (iii) an appearance thereof has a plate shape bent in a corrugated form.

The breadmaking tray of the present invention may further include a frame disposed under the breadmaking tray body B to support the same.

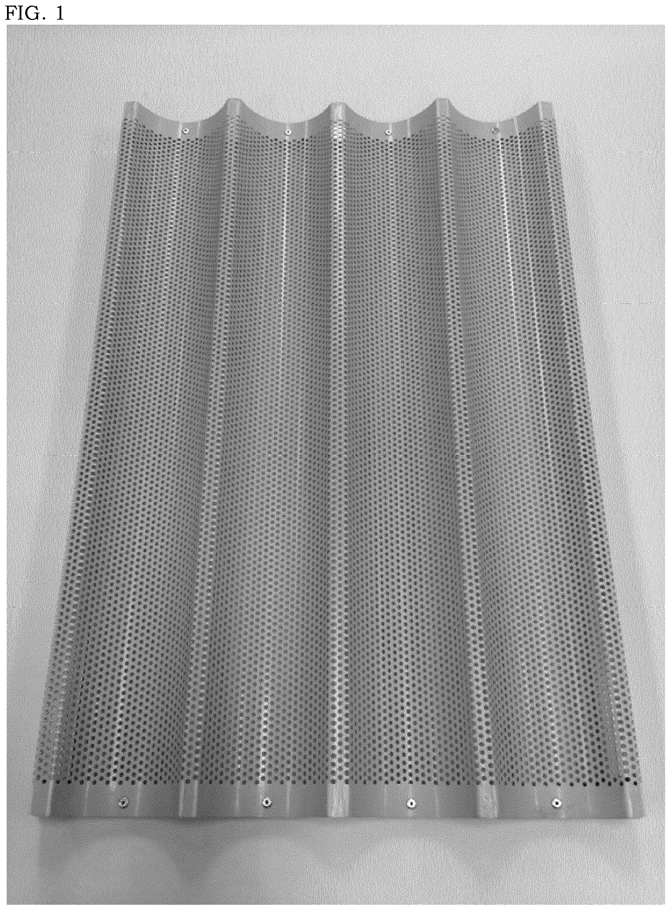

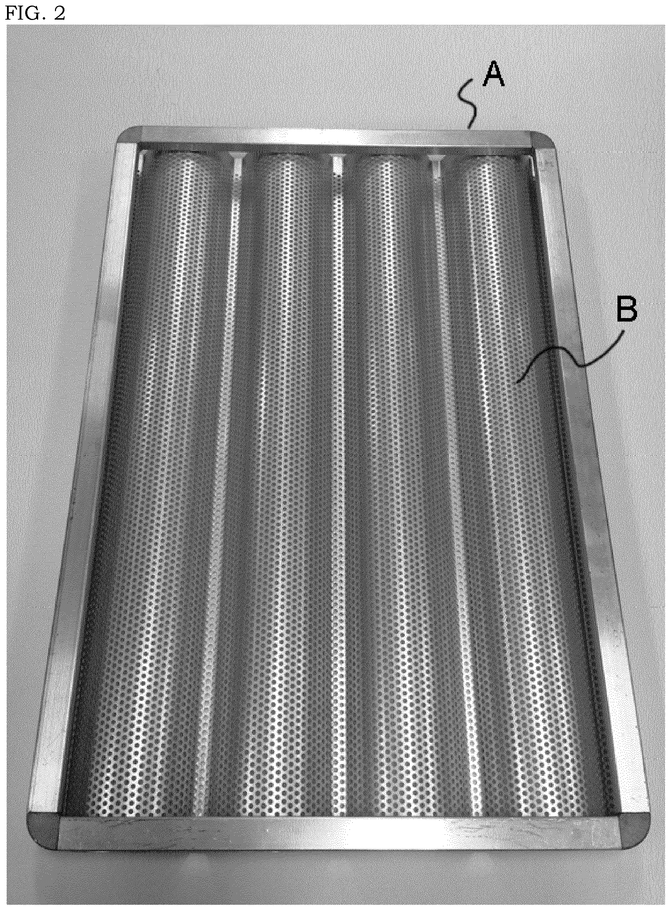

According to an embodiment of the breadmaking tray of the present invention, as illustrated in FIGS. 1 to 3, the breadmaking tray may include the breadmaking tray body B and a frame A disposed under the breadmaking tray body B to support the same, or may include only the breadmaking tray body B.

If the thickness of the fluorine resin film 2 is less than 75 µm, a height of the fluorine resin film 2 is decreased, such that flour dough C flows down to the inner walls of the holes h punched in the metal substrate 1 during the breadmaking process, thereby resulting in a significant reduction in the release properties. If the thickness thereof exceeds 500 µm, manufacturing costs are increased without any further improvement in the release properties.

The fluorine resin film included in the breadmaking tray body B of the present invention is made of polytetrafluoroethylene (PTFE), or is made of one selected from tetrafluoroethylene-hexafluoropropylene copolymer (FEP), tetrafluoroethylene-perfluoroalkyl vinyl ether (PFA), ethylene-tetrafluoroethylene copolymer (ETFE), polychlorotrifluoroethylene (PCTFE), polyvinylidene fluoride (PVDF), polyvinyl fluoride (PVF), tetrafluoroethylene-perfluoropropyl vinyl ether copolymer (TFM), polytetrafluoroethylene-perfluoromethyl vinyl ether copolymer (PFE/PMVE), and ethylene-chlorotrifluoroethylene copolymer (ECTEF).

The metal substrate 1 is made of aluminum, iron, copper, brass or Alcot™, and has a thickness of 0.5 to 3 mm.

The fluorine resin film 2 may be laminated only on the upper surface of the metal substrate 1, and the fluorine resin film 2 may be laminated on the upper and lower surfaces, that is, both surfaces of the metal substrate 1.

Next, a method for manufacturing a breadmaking tray according to the present invention will be described.

The method for manufacturing a breadmaking tray according to the present invention includes the steps of: (i) laminating a fluorine resin film 2 having a thickness of 75 to 500 µm on a metal substrate 1 by a thermal fusion bonding method under high temperature and high pressure conditions to prepare a base plate D; (ii) punching holes h in the base plate D prepared in the laminating step; and (iii) molding the base plate D having the holes h punched therein in the punching step into a shape of a breadmaking tray body B bent in a corrugated form.

As an embodiment of the present invention, first, the fluorine resin film 2 having a thickness of 75 to 500 µm is laminated on the metal substrate 1 by the thermal fusion bonding method under high temperature and high pressure conditions of 350 to 400 degrees Celsius to prepare the base plate D illustrated in FIG 5.

Next, punching and molding are performed on the base plate D prepared as described above to prepare the breadmaking tray body B.

The breadmaking tray body B manufactured as described above may be used as the breadmaking tray as it is, or if necessary, a step of disposing a frame A under the breadmaking tray body B prepared as described above so as to serve as a support may be further performed, such that, as illustrated in FIGS. 1 to 3, a breadmaking tray including the breadmaking tray body B and the frame A may be manufactured.

In the breadmaking tray body B of the present invention, since the fluorine resin film 2 having a relatively thicker thickness than that of the fluorine resin coating layer formed by the conventional coating method is laminated on the metal substrate 1, the flour dough C comes in contact with only the inner walls of the holes h punched in the fluorine resin film 2 having excellent release properties, while not contacting with the inner walls of the holes h punched in the metal substrate 1 during the breadmaking process.

Thereby, after the breadmaking process, a phenomenon, in which the breadmaking flour dough C is adhered to the inner walls of the holes h punched in the breadmaking tray body B to be remained, may be substantially prevented.

In the method of manufacturing a breadmaking tray according to the present invention, the fluorine resin film 2 is laminated on the plate-shaped metal substrate 1 by the thermal fusion bonding method, and then punching and molding are performed thereon. Therefore, when comparing with the conventional method of coating a fluorine resin on each breadmaking tray having the bent portion, there are effects of improving workability in a manufacturing process, improving release properties by preventing an occurrence of pin-holes, etc. during coating the fluorine resin, and also extending a service life. In addition, as compared with the conventional method of applying soybean oil, there is an effect of preventing contamination of the workplace environment due to oxidation of soybean oil.

As an embodiment of making bread using the breadmaking tray according to the present invention, a state, in which the flour dough C is placed on the breadmaking tray body B during the breadmaking process, is illustrated in FIG. 6 as a schematic view.

Meanwhile, as an embodiment of making bread using the conventional breadmaking tray having the fluorine resin coating layer 3 formed on the metal substrate 1, a state, in which a flour dough C is placed on the breadmaking tray body B during the breadmaking process, is illustrated in FIG. 7 as a schematic view.

In the case of the embodiment of the present invention, as illustrated in FIG. 6, the flour dough comes in contact with only the inner walls of the holes h punched in the fluorine resin film 2 having excellent release properties, while not contacting with the inner walls of the holes h punched in the metal substrate 1 having poor release properties during the breadmaking process, thereby significantly improving the release properties.

On the other hand, in the case of using the conventional breadmaking tray, as illustrated in Fig. 7, the flour dough comes in contact with the inner walls of the holes h punched in the fluorine resin film 2 having excellent release properties, as well as comes in contact with the inner walls of the holes h punched in the metal substrate 1 having poor release properties during the breadmaking process, thereby resulting in a significant reduction in the release properties.

### [Description of Reference Numerals]

A: frame
B: breadmaking tray body
C: flour dough
D: base plate
H: hole
1: metal substrate
2: fluorine resin film
3: fluorine resin coating layer

### [Industrial Applicability]

The breadmaking tray of the present invention may be used not only as a tray for making bread with flour dough, but also as other trays for making foods such as dumplings with flour dough.

## Claims

1. A breadmaking tray comprising:
a breadmaking tray body B in which (i) a fluorine resin film 2 having a thickness of 75 to 500 µm is laminated on a metal substrate 1 by a thermal fusion bonding method, ii) a plurality of holes h are punched therein, and (iii) an appearance thereof has a plate shape bent in a corrugated form.

2. The breadmaking tray according to claim 1, further comprising: a frame A disposed under the breadmaking tray body B to support the same.

3. The breadmaking tray according to claim 1 or 2, wherein the fluorine resin film 2 is made of polytetrafluoroethylene (PTFE).

4. The breadmaking tray according to claim 1 or 2, wherein the fluorine resin film 2 is made of one selected from tetrafluoroethylene-hexafluoropropylene copolymer (FEP), tetrafluoroethylene-perfluoroalkyl vinyl ether (PFA), ethylene-tetrafluoroethylene copolymer (ETFE), polychlorotrifluoroethylene (PCTFE), polyvinylidene fluoride (PVDF), polyvinyl fluoride (PVF), tetrafluoroethylene-perfluoropropyl vinyl ether copolymer (TFM), polytetrafluoroethylene-perfluoromethyl vinyl ether copolymer (PFE/PMVE), and ethylene-chlorotrifluoroethylene copolymer (ECTEF).

5. The breadmaking tray according to claim 1 or 2, wherein the metal substrate 1 is made of one selected from aluminum, iron, copper, brass and Alcot™.

6. The breadmaking tray according to claim 1 or 2, wherein the metal substrate 1 has a thickness of 0.5 to 3 mm.

7. The breadmaking tray according to claim 1 or 2, wherein the fluorine resin films 2 are laminated on both sides of the metal substrate 1.

8. A method for manufacturing a breadmaking tray, comprising the steps of:
(i) laminating a fluorine resin film 2 having a thickness of 75 to 500 µm on a metal substrate 1 by a thermal fusion bonding method under high temperature and high pressure conditions to prepare a base plate D;
(ii) punching holes h in the base plate D prepared in the laminating step; and
(iii) molding the base plate D having the holes h punched therein in the punching step into a shape of a breadmaking tray body B bent in a corrugated form.

9. The method for manufacturing a breadmaking tray according to claim 8, further comprising the step of: disposing a frame A under the breadmaking tray body B to support the same.

10. The method for manufacturing a breadmaking tray according to claim 8 or 9, wherein the fluorine resin film 2 is made of polytetrafluoroethylene (PTFE).

11. The method for manufacturing a breadmaking tray according to claim 8 or 9, wherein the fluorine resin film 2 is made of one selected from tetrafluoroethylene-hexafluoropropylene copolymer (FEP), tetrafluoroethylene-perfluoroalkyl vinyl ether (PFA), ethylene-tetrafluoroethylene copolymer (ETFE), polychlorotrifluoroethylene (PCTFE), polyvinylidene fluoride (PVDF), polyvinyl fluoride (PVF), tetrafluoroethylene-perfluoropropyl vinyl ether copolymer (TFM), polytetrafluoroethylene-perfluoromethyl vinyl ether copolymer (PFE/PMVE), and ethylene-chlorotrifluoroethylene copolymer (ECTEF).

12. The method for manufacturing a breadmaking tray according to claim 8 or 9, wherein the metal substrate 1 is made of one selected from aluminum, iron, copper, brass and Alcot™.

13. The method for manufacturing a breadmaking tray according to claim 8 or 9, wherein the metal substrate 1 has a thickness of 0.5 to 3 mm.
